# EUROPÄISCHE PATENTSCHRIFT

(11) **EP 0 345 438 B1**
(45) Veröffentlichungstag und Bekanntmachung des Hinweises auf die Patenterteilung: **06.07.1994**
(21) Anmeldenummer: 89106503.9
(22) Anmeldetag: 12.04.1989
(51) Int. Cl.: B60R 5/04

(54) **Abdeckrollo oder - einrichtung für einen Kofferraum eines Kraftfahrzeuges**
Roller blind or device for a motor vehicle boot
Rideau écran on dispositif pour un coffre de véhicule automobile

(30) Priorität: 10.06.1988 DE 3819766
(43) Veröffentlichungstag der Anmeldung: 13.12.1989
(73) Patentinhaber: Baumeister & Ostler GmbH & Co., 73773 Aichwald (DE)
(72) Erfinder: Ament, Eduard, D-7307 Aichwald 2 (DE)
(74) Vertreter: Rüger, Rudolf, Dr.-Ing.

(56) Entgegenhaltungen:
- EP-A- 0 234 497
- DE-A- 3 314 444
- FR-A- 1 168 737
- FR-A- 1 372 826
- US-A- 4 480 675

## Beschreibung

Die Erfindung betrifft ein Abdeckrollo oder eine -einrichtung für eine Zugangsöffnung eines Lade- oder Stauraums, insbesondere eines Kofferraums von Kombiwagen.

Bei sogenannten Kombiwagen ist der hinter der Rücksitzbank befindliche Lade- oder Kofferraum für gewöhnlich von außen einsehbar, da in der Karosserie standardmäßig hierfür keine Abdeckungen vorgesehen sind. Solche Abdeckungen würden stören, wenn in dem Laderaum größere Gegenstände untergebracht werden sollen oder wenn die Rücksitzbank zur Vergrößerung des Laderaums umgelegt bzw. aufgestellt wird.

Trotz einer eventuellen Behinderung beim Beladen wird die freie Einsehbarkeit des Laderaums häufig als unerwünscht empfunden, weshalb es als Zubehör Abdeckrollos für den Laderaum gibt. Diese Abdeckrollos werden an der Rücklehne der Rücksitzbank oder in deren unmittelbarer Nähe an den Seiten der Karosserie befestigt. Die Rollobahn des Abdeckrollos läßt sich dann über die Laderaumöffnung ziehen.

Wegen der leichteren Herausnehmbarkeit des Abdeckrollos werden hierzu bislang springrolloähnliche Konstruktionen eingesetzt, die allerdings den Nachteil haben, daß sich die Rollobahn in der Mitte deutlich einsenkt und gegenüber Belastung empfindlich ist.

Eine Abdeckeinrichtung mit Spriegeln zum Aussteifen der Rollobahn ist aus der DE-A-33 14 444 bekannt. Bei dieser Konstruktion laufen die Spriegel endseitig in Führungsschienen.

Aus der FR-A-1 372 826 ist eine Anordnung bekannt, mit deren Hilfe es möglich ist, die Abdeckplane für die Ladefläche eines LKW zu verstauen. Die Anordnung weist auf den Ladebordwänden des LKW zwei parallel mit Abstand zueinander verlaufende Führungsschienen auf, in denen bogenförmige Streben, die die Abdeckplane tragen, aufrechtstehend geführt sind.

Von jeder Führungsschiene ist in der Nähe des Fahrerhauses ein Abschnitt abgetrennt, der an seinem dem Führerhaus benachbarten Ende anscharniert ist und aus einer Stellung in Richtung parallel zu der Oberkante der Ladebordwand in eine vertikale Position überführt werden kann. Die Länge des Abschnittes entspricht dem Platzbedarf sämtlicher Streben, wenn sie in Richtung auf das Fahrerhaus zusammengeschoben sind. In diesem Zustand können die Streben, die sich in den betreffenden Abschnitten der beiden Führungsschienen befinden, umgeklappt werden, so daß sie auf dem Dach des Fahrerhauses zu liegen kommen.

Außerdem ist es aus der US-A-4 480 675 bekannt, zur Laderaumabdeckung eine Art Springrollo zu verwenden, bei dem der Federmotor jedoch in der Mitte der Rollobahn angebracht ist und die Rollobahn an diametral entgegenliegenden Stellen des Gehäuses austritt. Das Gehäuse selbst ist in Führungsschienen gleitend gelagert und kann, wenn die Rollobahn in das Gehäuse eingezogen ist, aus den Führungsschienen herausgenommen werden.

Ausgehend hiervon ist es Aufgabe der Erfindung, ein Abdeckrollo oder eine Abdeckeinrichtung für den Stau- oder Laderaum, insbesondere den Kofferraum eines Kombiwagens zu schaffen, das bei Bedarf leicht herauszunehmen ist.

Diese Aufgabe wird erfindungsgemäß durch das Abdeckrollo mit den Merkmalen bes Anspruches 1 gelöst.

Die Streben halten die Rollobahn im ausgezogenen Zustand sauber gerade zwischen den Führungsschienen und gewährleisten andererseits ein ordnungsgemäßes Zusammenfalten der zwischen den Streben befindlichen Rollobahnabschnitte. Eine besondere Aufwickelmechanik, wie bei Springrollos, die bei schiefer Anordnung zu einem schiefen Aufwickeln der Rollobahn führt, ist hierbei deswegen entbehrlich. Andererseits ermöglichen die mit den Führungsschienen zusammenwirkenden Mittel zum Herausnehmen der Streben eine sehr einfache Handhabung, da es genügt, sämtliche Streben in diese Mittel hineinzuschieben, um so alle Streben gleichzeitig herausnehmen zu können. Andererseits können auch alle Streben gleichzeitig wieder eingesetzt werden, und zwar ohne die Notwendigkeit, gegebenenfalls die einzelnen Streben nacheinander in die Führungsbahnen wieder einzufädeln.

Parallelitätsfehler der Führungsschienen werden ausgeglichen und gleichzeitig wird ein Klappern verhindert, indem wenigstens eines der Führungsstücke jeder Strebe gegenüber der Strebe verschieblich und in Richtung von der Strebe weg durch eine Feder vorgespannt ist.

Die Mittel zum Herausnehmen der Streben werden im einfachsten Falle von Führungsschienenstücken gebildet, die von dem in dem Fahrzeug verbleibenden Rest der Führungsschienen trennbar sind. Eine besondere Leichtgängigkeit der Streben beim Übergang auf den fest installierten Führungsschienen in die Mittel zum Herausnehmen der Streben wird erreicht, wenn diese Mittel in unmittelbarer Verlängerung der fest installierten Führungsschienen angebracht sind.

Wenn die Mittel zum Herausnehmen der Streben an den Enden der fest installierten Führungsschienen sitzen, ist, um ein Herausfallen der Streben aus diesen Mitteln zu verhindern, wenigstens eine der Streben, vorzugsweise die letzte, mit den Mitteln zum Herausnehmen der Streben untrennbar verbunden.

Eine besonders einfache Handhabung läßt sich erreichen, wenn in Verlängerung der fest installierten Führungsschienen jeweils Halteeinrichtungen für die Mittel zum Herausnehmen der Streben angeordnet sind. Damit die Mittel zum Herausnehmen der Streben in den Halteeinrichtungen möglichst festgelegt sind und während der Fahrt nicht klappern, sind Rastmittel zur Sicherung in der Halteeinrichtung vorgesehen.

Eine sehr einfache, robuste und leicht zu handhabende Halteeinrichtung enthält eine längliche Aufnahmetasche zur Aufnahme der Mittel zum Herausnehmen der Streben, wobei die Aufnahmetasche eine Öffnung zum Durchtritt der Streben aufweist, die in Richtung auf die gegenüberliegende Halteeinrichtung zu offen ist. Ferner ist jede Aufnahmetasche mit einer Einsetzöffnung versehen, durch die hindurch die Mittel zum Herausnehmen der Streben in die Aufnahmetasche einzuführen oder aus dieser herauszunehmen sind. Diese Aufnahmetasche grenzt bevorzugt an die jeweilige im Fahrzeug fest installierte Führungsschiene an, derart, daß die Öffnung für die Streben und die Einsetzöffnung in Verlängerung der jeweiligen Führungsschiene verlaufen.

Um ein Herausspringen der Mittel zum Herausnehmen der Streben aus der Aufnahmetasche sicher zu vermeiden und andererseits ein Klappern zu verhindern, umfassen die Rastmittel einen Vorsprung, der an einem der jeweiligen Führungsschiene benachbarten Ende der Eintrittsöffnung angeordnet ist, sowie eine die Aufnahmetasche an ihrem von dem Vorsprung abliegenden Ende befindliche Ausnehmung, wobei eine in der Ausnehmung angeordnete Federeinrichtung die Mittel zum Herausnehmen der Streben in Richtung auf das mit dem Vorsprung versehene Ende der Tasche vorspannt.

Um ein Herausgleiten der Streben aus den Führungsschienen beim versehentlichen Schiefziehen zu vermeiden, haben die Führungsschienen ein etwa C-förmiges Querschnittsprofil, derart, daß die Streben in den Führungsschienen in Richtung senkrecht zu diesen formschlüssig gehalten sind. Hierzu sind die Streben vorzugsweise mit Führungsstücken an ihren Enden versehen, die in den Führungsschienen bzw. in den Mitteln zum Herausnehmen der Streben gleitfähig sind.

Die Handhabung der Streben in herausgenommenem Zustand wird vereinfacht, wenn die Mittel zum Herausnehmen der Streben eine Rasteinrichtung aufweisen, durch das die Streben im gerafften Zustand gehalten werden. Diese Rasteinrichtungen können im einfachsten Falle von einer Blattfeder gebildet sein.

Das Einsetzen der Mittel zum Herausnehmen der Streben wird vereinfacht, wenn die Einsetzöffnung an den Taschen an ihrem Rand abgeschrägt ist, so daß sich die Tasche in Richtung auf die Einsetzöffnung erweitert.

In der Zeichnung ist ein Ausführungsbeispiel des Gegenstandes der Erfindung dargestellt. Es zeigen:
- Fig. 1: ein über dem Laderaum eines Kombiwagens angeordnetes, teilweise ausgezogenes Abdeckrollo gemäß der Erfindung in einer perspektivischen Darstellung, wobei eine Seitenwand des PKW weggebrochen ist,
- Fig. 2: eine der Halteeinrichtung für die herausnehmbaren Führungsschienenstücke des Abdeckrollos nach Fig. 1, in einer Seitenansicht beim Einführen des Führungsschienenstückes in die zugehörige Aufnahmetasche,
- Fig. 3: die Halteeinrichtung nach Fig. 2 in einer Draufsicht bei eingesetztem Führungsschienenstück zusammen mit einem Abschnitt des gerafften Abdeckrollos,
- Fig. 4: die Halteeinrichtung nach Fig. 3 mit eingesetztem Führungsschienenstück in einem Querschnitt, parallel zu den Streben des Abdeckrollos und
- Fig. 5: ein Führungsstück der Streben des Abdeckrollos nach Fig. 1 zusammen mit einem Abschnitt einer Strebe in einer perspektivischen Explosionsdarstellung.

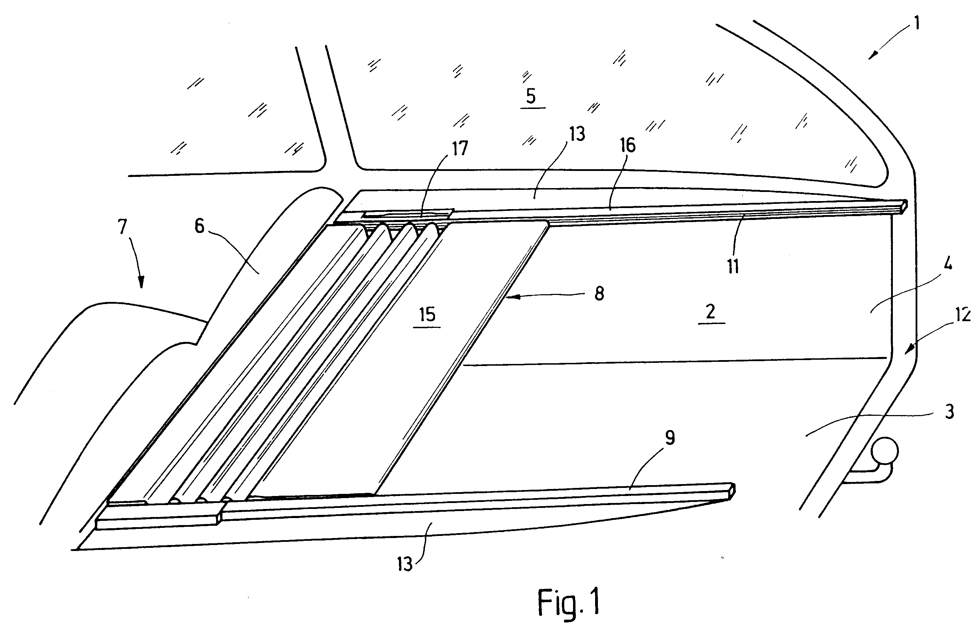

In Fig. 1 ist die aufgebrochen dargestellte Heckpartie 1 eines Kombiwagens perspektivisch veranschaulicht, dessen Laderaum 2 von einem Boden 3 sowie zwei Seitenwänden begrenzt ist, von denen nur die rechte Seitenwand 4 erkennbar ist. Über der Seitenwand 4 befindet sich ein hinteres Heckfenster 5, während den vorderen Abschluß des Laderaums 2 eine Rücksitzlehne 6 einer Rücksitzbank 7 bildet.

Zum Abdecken des Laderaums 2 ist ein Abdeckrollo 8 vorgesehen, das sich knapp unterhalb der Unterkante des heckseitigen Seitenfensters 5 und etwa auf Höhe der Oberkante der Rücksitzlehne 6 befindet. Das Abdeckrollo 8 weist zwei parallel und im Abstand voneinander befindliche gerade Führungsschienen 9 und 11 auf, die knapp unterhalb der Unterkanten der benachbarten Seitenfenster 5 an jeder der beiden Seitenwände 4 befestigt sind. Die Führungsschienen 9 und 11 erstrecken sich von der Rückseite der Rücksitzlehne 6 bis zu einer Hecköffnung 12 des PKW, die durch eine nicht veranschaulichte Ladeklappe zu verschließen ist. Der Zwischenraum zwischen den Führungsschienen 9 und 11 und den nach außen bombierten Seitenwänden 4 ist durch entsprechend angepaßte Füllstücke 13 ausgefüllt.

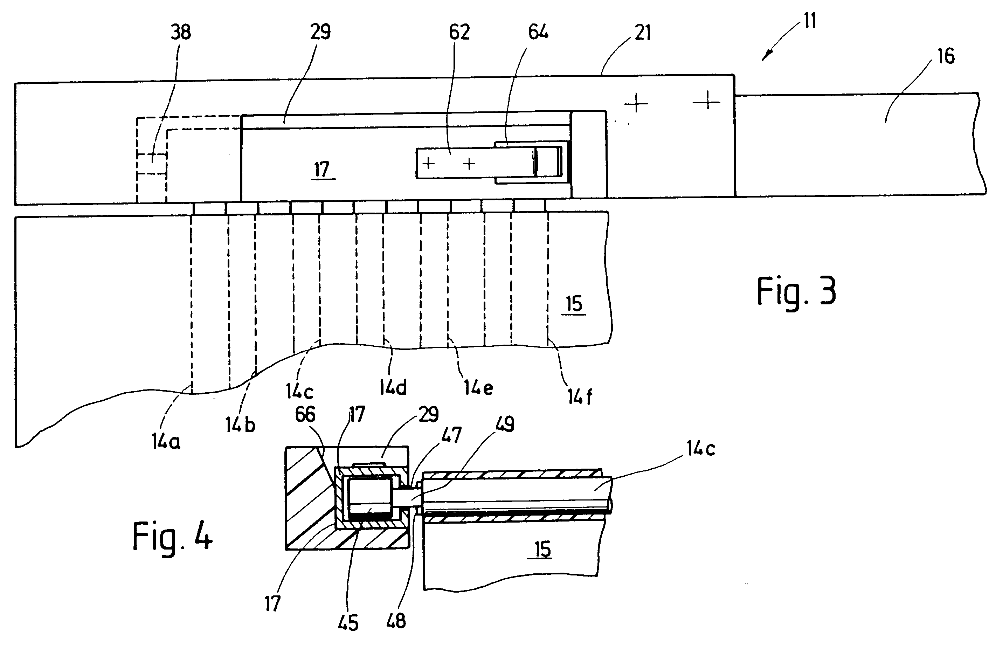

Die Führungsschienen 9 und 11 dienen der Führung von beim Ausführungsbeispiel insgesamt sechs rohrförmigen Streben 14a bis 14f, die parallel zueinander verlaufen und endseitig in den Führungsschienen 9 und 11 gehaltert sind. Die rohrförmigen Streben 14a bis 14f tragen eine Rollobahn 15, an deren Unterseite sie äquidistant verteilt befestigt sind. Die Rollobahn 15 ist ein rechteckiger und undurchsichtiger Kunststofffolienzuschnitt, der gegebenenfalls eine Stoffverstärkung aufweist und dessen Breite gleich dem Abstand der beiden Führungsschienen 9 und 11 voneinander ist, während die Länge des Zuschnitts dem Abstand der Rückseite der Rücksitzlehne 6 von der Ladeöffnung 12 entspricht. Die letzte Strebe 14f ist mit der der Ladeöffnung 12 benachbarten Kante der Rollobahn 15 verbunden, während die am weitesten vorne liegende Strebe 14a bei eingesetztem Abdeckrollo 8 in der Nähe der Rücksitzlehne 6 festgesetzt ist. Durch manuelles Verschieben der letzten Strebe 14f in Richtung auf die Ladeöffnung 12 läßt sich die Rollobahn 15 über dem Laderaum 2 ausbreiten, um den Laderaum nach oben abzuschließen. Andererseits kann die Rollobahn 15 auch wiederum in Richtung auf die Rücksitzlehne 6 zurückgeschoben werden, wobei die Rollobahn 15 zwischen den Streben 14a bis 14f herunterhängende Falten bildet, wenn die Streben 14a bis 14f, wie Fig. 3 zeigt, dicht zusammengeschoben sind. Dies ist der geraffte oder vollständig aufgezogene Zustand des Abdeckrollos 8.

Um die Rollobahn 15 zusammen mit den daran befestigten Streben 14a bis 14f leicht herausnehmen zu können, wenn der Laderaum 2 durch Umlegen des Rücksitzes 7 vergrößert werden soll, sind die beiden Führungsschienen 9 und 11 in gleicher Weise in einen längeren, in dem Kraftfahrzeug fest installierten Abschnitt 16 und ein herausnehmbares Führungsschienenstück 17 aufgeteilt, das sich bei beiden Führungsschienen 9 und 11 in der Nähe der Rücksitzlehne 6 befindet und eine Länge aufweist, die dem Platzbedarf entspricht, den die Streben 14a bis 14f bei völlig geraffter Rollobahn 15 erfordern. Da die beiden Führungsschienen 9 und 11 abgesehen von ihrer Spiegelbildlichkeit identisch sind, erfolgt die nachstehende Beschreibung über die Halterung des herausnehmbaren Führungsschienenstückes 17 nur in Verbindung mit der Führungsschiene 11. Es versteht sich, daß die Beschreibung sinngemäß auch für die Führungsschiene 9 und ihre Bestandteile gilt.

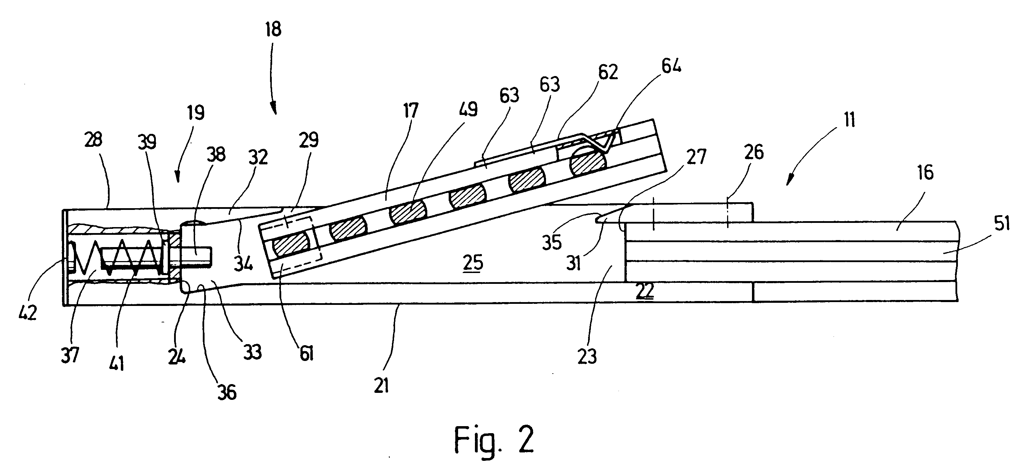

An dem vorderen Ende des fest installierten Abschnittes 16 der Führungsschiene 11 befindet sich eine Halteeinrichtung 18 mit einer Rasteinrichtung 19 für das herausnehmbare Führungsschienenstück 17. Die Halterungseinrichtung 18 besteht aus einem länglichen, quaderförmigen Block 21, der auf seiner der gegenüberliegenden Halterungseinrichtung zugekehrten ebenen Seite 22 eine im Querschnitt rechteckige Nut 23 enthält, die das hintere in Fig. 2 rechts liegende Ende des quaderförmigen Blockes 21 durchsetzt und im Abstand zu dem vorderen Ende des Blockes 21 an einer ebenen Stirnwand 24 stumpf endet. Die Stirnwand 24 ist rechtwinklig zu der Längserstreckung der Nut 23, die in einem Abschnitt 25 eine Aufnahmetasche für das herausnehmbare Führungsschienenstück 17 bildet.

Der am hinteren Ende des quaderförmigen Blockes 21 gelegene Teil der Nut 23 dient der Aufnahme des fest installierten Führungsschienenabschnittes 16, der, wie Fig. 2 zeigt, ein Stück weit in die Nut 23 hineinragt. Der Querschnitt der Nut 23 entspricht den Außenabmessungen des Querschnittes der Führungsschiene 11, wobei um die relative Lage zwischen der Halteeinrichtung 18 und dem fest installierten Führungsschienenabschnitt 16 einzuhalten, der Block 21 mit diesem Teil 16 der Führungsschiene 11 durch schematisch angedeutete Schrauben 26 unlösbar verbunden ist.

In der Nut 23 bildet die Führungsschiene 11 eine Stirnseite 27, die parallel zu der Stirnseite 24 verläuft und in einem Abstand angeordnet ist, der geringfügig größer ist als die Länge des herausnehmbaren Führungsschienenstückes 17.

In einer in der Gebrauchsstellung oben befindlichen Seitenwand 28 des quaderförmigen Blockes 21 ist eine rechteckige Entnahmeöffnung 29 vorgesehen, deren Breite der Tiefe der Nut 23 entspricht und deren Länge, gemessen in Richtung der Führungsschiene 11, kleiner ist als die Länge des herausnehmbaren Führungsschienenstückes 17. Auf diese Weise entsteht, wie Fig. 2 zeigt, in der Nähe der Stirnseite 27, die das hintere Ende einer im übrigen von der Nut 23 gebildeten Aufnahmetasche 25 festlegt, ein Vorsprung 31 sowie ein weiterer Vorsprung 32 in der Nähe der vorderen Stirnseite 24. Die Aufnahmetasche 25 erhält dadurch eine taschenförmige Ausnehmung 33, die unmittelbar an die Stirnwand 24 angrenzt.

Um das Einführen und Entnehmen des Führungsschienenstückes 17 zu erleichtern, ist der Vorsprung 32 an seiner Unterseite 34 und der Vorsprung 31 an seiner Oberseite 35 in Richtung auf das jeweilige freie Ende zu konvergierend abgeschrägt. Außerdem ist die Ausnehmung 33 in der Nähe der Stirnwand 24, wie gezeigt, bei 36 muldenartig vertieft, damit beim Herausnehmen des Führungsschienenstückes 17 dessen vorderes Ende ungehindert eine nach unten gerichtete Ausweichbewegung vollführen kann.

Damit das Führungschienenstück 17 in der Aufnahmetasche 25 festgelegt ist, enthält der quaderförmige Block 21 an seinem vorderen Ende eine Stufenbohrung 37, deren verjüngter Abschnitt durch die Stirnwand 24 hindurchführt. In dieser Stufenbohrung 37 steckt längsverschieblich ein zylindrischer Stößel 38, der mit seinem freien Ende in die Aufnahmetasche 25 hineinragt und auf seinem der Stufenbohrung 37 sitzenden Ende eine Ringschulter 39 trägt. An dieser Ringschulter 39 liegt eine Schraubenfeder 41 an, die sich anderenends auf einer Verschlußkappe 42 für die Stufenbohrung 37 abstützt.

Das herausnehmbare Führungsschienenstück 17 hat dieselbe C-förmige Profilgestalt wie der in dem Kraftfahrzeug fest installierte Abschnitte 17 und verläuft, wenn er in die Aufnahmetasche 25 eingesetzt ist, in gerader Verlängerung des Abschnittes 16.

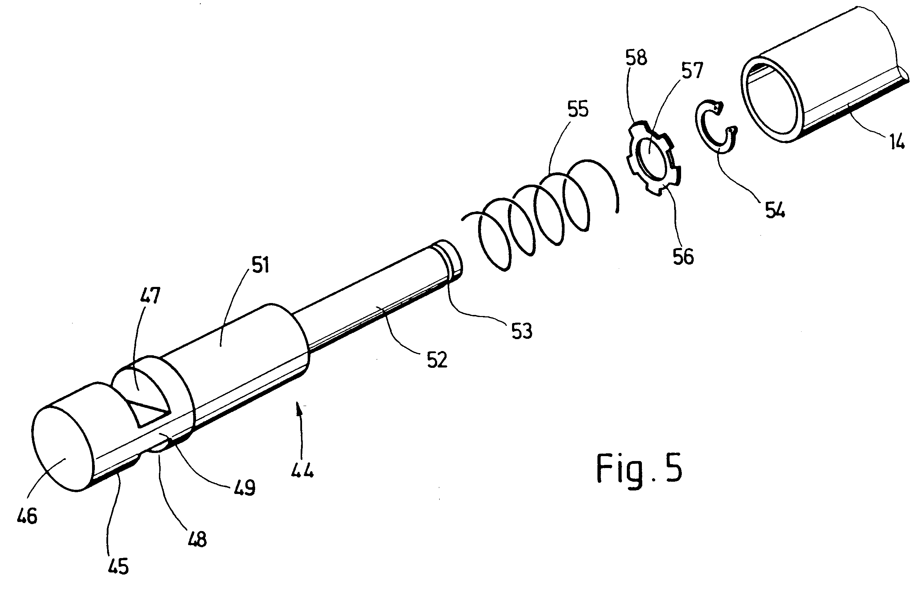

Die Streben 14a bis 14f sind untereinander gleich und bestehen, wie Fig. 5 zeigt, aus Rohren, die etwas kürzer sind als der Abstand zwischen den beiden Führungsschienen 9 und 11. In jeder der rohrförmigen Streben 14 steckt vom offenen Ende her ein Führungsstück 44, das in der Strebe 14 teleskopartig verschiebbar ist. Das Führungsstück 44 enthält einen zylindrischen aus der Strebe 14 hervorstehenden Kopf 45, der im Abstand von seiner Stirnseite 46 mit zwei zueinander parallelen Nuten 47 und 48 versehen ist, die parallel zu einem Durchmesser des Kopfes 45 verlaufen. Zwischen den beiden Nuten 47 und 48 verbleibt ein parallelflankiger Steg 49, dessen Dicke der Weite des Schlitzes entspricht, den die im Profil C-förmigen Führungsschienen 9, 11 begrenzen und der in Fig. 2 mit 51 bezeichnet ist. Der Durchmesser des zylindrischen Kopfes 45 entspricht ansonsten der lichten Weite des von den Führungsschienen 9, 11 begrenzten Innenraums. In Fig. 2 sind die Stege 49 geschnitten zu erkennen.

Der zylindrische Kopf 45 geht auf seiner der Stirnseite 46 abliegenden Seite in einen zylindrischen Zapfen 51 mit geringerem Durchmesser über. Der Durchmesser des zylindrischen Zapfens entspricht der lichten Weite der rohrförmigen Strebe 14. Damit das Führungsstück 44 leicht in den Führungsschienen 9, 11 gleiten kann, bestehen der zylindrische Kopf 45 und der zylindrische Zapfen 51 aus einem einstückigen Kunststofformteil.

In den zylindrischen Zapfen 51 ist koaxial ein Stahlzapfen 52 eingesetzt, der an seinem freien Ende eine Nut 53 für einen Außensprengring 54 trägt. Auf dem Zapfen 52 sitzt eine Druckfeder in Gestalt einer Schraubenfeder 55, die sich einerseits an dem zylindrischen Zapfen 51 abstützt und deren anderes Ende eine Sicherungsscheibe 56 gegen den Außensprengring 54 drückt. Die Sicherungsscheibe 56 enthält hierzu ein konzentrisches Loch 57 und dient der Verankerung des Führungsstückes 44 in der rohrförmigen Strebe 14. Zu diesem Zweck hat die Sicherungsscheibe 57 ähnlich einer Außenzahnscheibe mehrere nach außen vorstehende Laschen 58, die einen Durchmesser definieren, der geringfügig größer ist als die lichte Weite der rohrförmigen Strebe 14. Hierdurch wird erreicht, daß wenn die montierte Einheit, bestehend aus dem Führungsstück 44, der darauf sitzenden Druckfeder 55, der Sicherungsscheibe 56 und dem Sprengring 54 in die Strebe 14 eingeschoben wird, sich die Laschen 58 entgegen der Einschieberichtung geringfügig umlegen und sich die Anordnung in das Rohr 14 eindrücken läßt. Durch kurzes Anziehen richten sich die an der Innenseite der rohrförmigen Strebe 14 verkrallten Laschen 58 auf und verriegeln eine weitere Bewegung der Sicherungsscheibe 56 in der rohrförmigen Strebe 14. Das Führungsstück 44 ist auf diese Weise in der rohrförmigen Strebe 14 axial verschieblich und durch die Feder 55 ein Stück weit axial nach außen vorgespannt. Die Flanken der beiden Nuten 47 und 48 werden auf diese Weise in Anlage zu den benachbarten Rändern der beiden Führungsschienen 9 und 11 gehalten, wobei ein Klappern der Streben 14a bis 14f wirksam verhindert ist.

Die oben erwähnte Festsetzung der am weitesten vorne liegenden Strebe 14a geschieht in dem Führungsschienenstück 17, indem mit Hilfe eines eingesetzten Stückes 61 deren Führungsstücke 44 am vorderen Ende des Führungsschienenstücks 17 arretiert ist. Gleichzeitig bildet das eingesetzte Füllstück 61 einen Anschlag, der mit dem Bolzen 38 zusammenwirkt.

Die Handhabung des insoweit beschriebenen Abdeckrollos 8 geschieht in der folgenden Weise: Es sei angenommen, daß sich das Abdeckrollo 8 in der in Fig. 1 gezeigten Lage befindet. Wenn die Rollobahn 15 herausgenommen werden soll, wird zunächst die hinterste Strebe 14f in den beiden Führungsschienen 9 und 11 geführt nach vorne in Richtung auf die Rücksitzlehne 6 geschoben. Dabei werden sämtliche vor ihr liegenden Streben 14b bis 14e ebenfalls in Richtung auf die in dem herausnehmbaren Führungsschienenstück 17 festgelegte Strebe 14a bewegt. Im Verlauf dieser Bewegung befinden sich schließlich sämtliche Streben 14a bis 14f mit ihren Führungsstücken 44 parallel nebeneinanderliegend in den beiden aufeinander ausgerichteten Führungsschienenstücken 17. Dabei laufen die in den Führungsschienen 9 und 11 befindlichen Teile der Führungsköpfe 45 nacheinander unter einer Blattfeder 62 hindurch, die auf der Oberseite des herausnehmbaren Führungsschienenstückes 17 mittels schematisch angedeuteter Nieten 63 befestigt ist. Das freie Ende der Blattfeder 62 ist, wie gezeigt, V-förmig abgekröpft und ragt durch eine Öffnung 64 in den von dem Führußgsschienenstück 17 begrenzten Innenraum in der Nähe des hinteren Endes des Führungsschienenstückes 17. Die Federkraft der Blattfeder 63 ist derart bemessen, daß die Rücksprungkraft der zusammengefalteten Rollobahn 15 nicht ausreicht, um den mit der Blattfeder 62 in Eingriff stehenden Führungskopf 45 der Strebe 14f unter dem freien Ende der Blattfeder 62 hindurchzudrücken.

Wenn nun weiter auf die Strebe 14f eine Kraft in Richtung auf die Rücksitzlehne 6 einwirkt, werden in den Aufnahmetaschen 25 die Führungsschienenstücke 17, die auf der unten befindlichen Seitenwand der Nut 23 satt aufliegen, gegen die Wirkung des federvorgespannten Bolzens 38 in die taschenförmige Ausnehmung 33 geschoben. Dabei kommt das hintere Ende des Führungsschienenstückes 17 unter dem Vorsprung 31 frei und durch gleichzeitiges Anheben der Strebe 14f lassen sich die beiden Führungsschienenstücke 17 gleichzeitig in den Aufnahmetaschen 25 verkanten, um die hinteren Enden über den Vorsprung 31 zu heben. Dabei taucht das dem abgefederten Bolzen 38 benachbarte vordere Ende in die Vertiefung 36 ein. Nachdem durch Anheben der Strebe 14f die Führungsschienenstücke 17 über die Vorsprünge 31 gehoben sind, können sämtliche Streben 14a bis 14f zusammen mit der an ihnen befestigten Rollobahn 15 mit dem an ihnen hängenden Führungsschienenstücken 17 nach oben und hinten aus den Aufnahmetaschen 25 durch die Entnahmeöffnung 29 hindurch herausgezogen werden. Sämtliche Streben liegen jetzt dicht gepackt nebeneinander und sind in den Führungsschienenstücken 17 gefesselt und miteinander verbunden. Sie liegen damit als ein leicht zu handhabendes Paket vor. Da die Führungsstücke 44 den dem Schlitz 51 benachbarten Rändern der beiden Führungsschienenstücke 17 übergriffen sind, können letztere auch nicht von den Enden der Streben 14a bis 14f freikommen.

Das Einsetzen der beiden Führungsschienenstücke 17 samt dem darin befindlichen Streben 14a bis 14f geschieht sinngemäß in der umgekehrten Weiss wie das Herausnehmen.

Da durch den federvorgespannten Stößel 38 das jeweilige Führungsschienenstück 17 in Anlage zu der Stirnseite 27 des fest installierten Abschnittes 16 der Führungsschiene 9 bzw. 11 gehalten wird, kann ohne Schwierigkeit jede der verschiebbaren Streben 14b bis 14f die Trennfuge zwischen dem Führungsschienenstück 17 und dem Abschnitt 16 überwinden. Gleichzeitig ist ein Freikommen des Führungsschienenstückes 17 aus der Aufnahmetasche 25 mit Hilfe des Vorsprunges 31 verriegelt.

Um das Einsetzen der Führungsschienenstücke 17 in die Aufnahmetasche 25 durch die Einsetzöffnung 29 hindurch zu erleichtern, kann, wie in Fig. 4 zusätzlich dargestellt, die Einsetzöffnung 29 sich an ihrem Rand bei 66 in Richtung auf die Entnahmetasche trichterförmig verengen. Den in die Entnahmetasche 25 eingesetzten Zustand zeigt Fig. 3 in einer Draufsicht, wobei sich sämtliche Streben 14a bis 14f mit ihren Führungsstücken 44 in dem Führungsschienenstück 17 befinden.

## Patentansprüche

1. Abdeckrollo oder -einrichtung (8) für eine Zugangsöffnung eines Lade-, Stau- oder Kofferraumes (2) von Kombiwagen,
mit einer Rollobahn (15), durch die die Zugangsöffnung abzudecken ist,
mit zwei parallel und im Abstand zueinander verlaufenden Führungsschienen (9,11), die in einer gemeinsamen Ebene verlaufen, die sich vor der durch das Abdeckrollo (8) zu verschließenden Zugangsöffnung befindet,
mit einer Anzahl von an der Rollobahn (15) befestigten Streben (14), die die Rollobahn (15) aussteifen und endseitig in den Führungsschienen (9,11) geführt sind,
mit in dem Verlauf der Führungsschienen (9, 11) angeordneten Mitteln (17), die bei geöffnetem Abdeckrollo (8) sämtliche Streben (14) aufnehmen und die samt den Streben (14) sowie der Rollobahn (15) von den Führungsschienen (9,11) trennbar sind,
mit Führungsstücken (44), von denen je eines an einem Ende jeder Strebe (14) vorgesehen ist und die in den Führungsschienen (9,11) bzw. den Mitteln (44) zum Herausnehmen der Streben (14) gleitend geführt sind, wobei wenigsten ein Führungsstück (44) jeder Strebe (14) gegenüber der Strebe (14) in deren Längsrichtung verschieblich und mittels einer Feder (55) in Richtung von der Strebe (14) weg vorgespannt ist.

2. Einrichtung nach Anspruch 1, dadurch gekennzeichnet, daß die Mittel (17) zum Herausnehmen der Streben (14a ... 14f) je ein Führungsschienenstück enthalten.

3. Einrichtung nach Anspruch 1, dadurch gekennzeichnet, daß zumindest ein Teil (16) der Führungsschiene (9, 11) in dem Fahrzeug fest installiert ist.

4. Einrichtung nach Anspruch 1, dadurch gekennzeichnet, daß die Mittel (17) zum Herausnehmen der Streben (14a ... 14f) an einem Ende der jeweiligen Führungsschiene (9, 11) angeordnet sind.

5. Einrichtung nach Anspruch 1, dadurch gekennzeichnet, daß eine (14a) der Streben (14a ... 14f) mit den Mitteln (17) zum Herausnehmen der Streben (14a ... 14f) unlösbar verbunden ist.

6. Einrichtung nach Anspruch 1, dadurch gekennzeichnet, daß zur Halterung der Mittel (17) zum Herausnehmen der Streben (14a ... 14f) je eine Halterungseinrichtung (18) vorgesehen ist und daß beide Halterungseinrichtungen (18) aufeinander ausgerichtet sind bzw. sich, bezogen auf die Längserstreckung der Führungsschienen (9, 11), auf gleicher Höhe befinden.

7. Einrichtung nach Anspruch 6, dadurch gekennzeichnet, daß die Halterungseinrichtung (18) in Verlängerung der jeweiligen Führungsschiene (9, 11) angeordnet ist.

8. Einrichtung nach Anspruch 6, dadurch gekennzeichnet, daß die Halterungseinrichtung (18) mit Rastmitteln (19) zur Sicherung der in die Halterungseinrichtung (18) eingesetzten Mittel (17) zum Herausnehmen der Streben (14a ... 14f) versehen ist.

9. Einrichtung nach Anspruch 6, dadurch gekennzeichnet, daß die Halterungseinrichtung (18) eine längliche Aufnahmetasche (25) zur Aufnahme der Mittel (17) zum Herausnehmen der Streben (14a ... 14f) aufweist, und daß die Aufnahmetasche (25) zum Durchtritt der Streben (14a ... 14f) eine in Richtung auf die gegenüberliegende Halterungseinrichtung (18) weisende Öffnung (23) sowie eine Einsetzöffnung (29) aufweist, durch die hindurch die Mittel (17) zum Herausnehmen der Streben (14a ... 14f) in die Aufnahmetasche (25) einzuführen oder aus dieser herauszunehmen sind.

10. Einrichtung nach den Ansprüchen 3 und 9, dadurch gekennzeichnet, daß die Aufnahmetaschen (25) unmittelbar an die in dem Fahrzeug fest installierten Abschnitte (16) der Führungsschienen (9, 11) angrenzen, derart, daß die Öffnung für die Streben (14a ... 14f) und die Einsetzöffnung (29) der Halteeinrichtungen (18) in Verlängerung der jeweiligen Führungsschienen (9, 11) verlaufen.

11. Einrichtung nach Anspruch 9, dadurch gekennzeichnet, daß die Rastmittel (19) einen Vorsprung (31) umfassen, der an einem der jeweiligen Führungsschiene (9, 11) benachbarten Ende der Einsetzöffnung (29) vorgesehen ist, sowie eine taschenförmige Ausnehmung (33), die an dem von dem Vorsprung (31) abliegenden Ende der Aufnahmetasche (35) vorgesehen ist, daß die Tiefe der Ausnehmung (33) größer als die Höhe des Vorsprunges (31) ist und daß in die Ausnehmung (33) ein Vorspannglied (38) ragt, durch das die in die Aufnahmetasche (25) eingesetzten Mittel (17) zum Herausnehmen der Streben (14a ... 14f) in Richtung auf das dem Vorsprung (31) benachbarte Ende der Aufnahmetasche (25) vorspannbar sind.

12. Einrichtung nach Anspruch 1, dadurch gekennzeichnet, daß die Führungsschienen (9, 11) ein C-förmiges Profil aufweisen und daß die Streben (14a ... 14f) mit den Führungsschienen (9, 11) in Längsrichtung, bezogen auf die Streben (14a ... 14f) formschlüssig verbunden sind.

13. Einrichtung nach Anspruch 1, dadurch gekennzeichnet, daß die Mittel (17) zum Herausnehmen der Streben (14a ... 14f) eine Rasteinrichtung (62) aufweisen, durch die die Streben (14a ... 14f) in den Mitteln (17) zum Herausnehmen der Streben (14a ... 14f) verrastbar zu halten sind.

14. Einrichtung nach Anspruch 13, dadurch gekennzeichnet, daß die Rasteinrichtung von je einer Blattfeder (62) gebildet ist.

## Claims

1. Roll-up cover or cover arrangement (8) for the access opening to the loading, stowage or luggage area (2) in estate cars, having
a cover sheet (15), by means of which the access opening is to be covered;
two parallel guide rails (9, 11) running at a distance from one another and in a common plane situated in front of the access opening to be closed by the roll-up cover;
a number of struts (14), which are fastened to the cover sheet (15) to reinforce said cover sheet (15) and the ends of which are disposed in the guide rails (9, 11);
means (17) arranged in the extension of the guide rails (9, 11) to receive all the struts (14) when the roll-up cover (8) is open and which may be detached from the guide rails (9, 11) together with the struts (14) and the cover sheet (15);
guide elements (44), one of which is provided at each end of each strut (14) and which are arranged to slide into the guide rails (9, 11) or into the means (44) for removal of the struts (14), whereby at least one guide element (44) of each strut (14) is movable in relation to the strut (14) in its longitudinal direction and is biased away from the strut (14) by means of a spring (55).

2. Arrangement according to Claim 1, characterised in that the means (17) for removal of the struts (14a... 14f) are each provided with a guide rail section.

3. Arrangement according to Claim 1, characterised in that at least one portion (16) of the guide rail (9, 11) is firmly mounted in the vehicle.

4. Arrangement according to Claim 1, characterised in that the means (17) for removal of the struts (14a...14f) are disposed at one end of the respective guide rail (9, 11).

5. Arrangement according to Claim 1, characterised in that one (14a) of the struts (14a...14f) is undetachably connected to the means (17) for removal of the struts (14a...14f).

6. Arrangement according to Claim 1, characterised in that an anchoring means (18) is provided in each case for holding the means (17) for removal of the struts (14a...14f), and that both anchoring means (18) are aligned to one another or are situated on the same level relative to the longitudinal extension of the guide rails (9, 11).

7. Arrangement according to Claim 6, characterised in that the anchoring means (18) is provided as an extension to the respective guide rail (9, 11).

8. Arrangement according to Claim 6, characterised in that the anchoring means (18) is provided with catch elements (19) to secure the means (17) for removal of the struts (14a...14f) inserted in said anchoring means (18).

9. Arrangement according to Claim 6, characterised in that the anchoring means (18) has an elongated cavity (25) to receive the means (17) for removal of the struts (14a...14f), and that said cavity (25) has an opening (23) pointing towards the opposite anchoring means (18) for the struts (14a...14f) to pass through and also an attachment opening (29), through which the means (17) for removal of the struts (14a...14f) may be inserted into said cavity (25) or removed therefrom.

10. Arrangement according to Claims 3 and 9, characterised in that the cavities (25) directly adjoin the sections (16) of the guide rails (9, 11) firmly mounted in the vehicle in such a way that the opening for the struts (14a...14f) and the attachment opening (29) for the anchoring means (18) run as an extension of the respective guide rails (9, 11).

11. Arrangement according to Claim 9, characterised in that the catch elements (19) comprise a projection (31), which is provided on an end of the attachment opening (29) adjacent to the respective guide rail (9, 11), and a cavity-like recess (33), which is provided on the end of the cavity (35) remote from said projection (31); that the depth of said recess (33) is greater than the height of said projection (31); and that a pretensioning element (38) protrudes into said recess (33) to bias the means (17) for removal of the struts (14a...14f) inserted in said cavity (25) towards the end of said cavity (25) adjacent to said projection (31).

12. Arrangement according to Claim 1, characterised in that the guide rails (9, 11) have a C-shaped profile, and that the struts (14a...14f) are positively joined to the guide rails (9, 11) in longitudinal direction, relative to the struts (14a...14f).

13. Arrangement according to Claim 1, characterised in that the means (17) for removal of the struts (14a...14f) are provided with a catch mechanism (62) to lock the struts (14a...14f) in the means (17) for removal of the struts (14a...14f).

14. Arrangement according to Claim 13, characterised in that the catch mechanism is formed by a leaf spring (62) in each case.

## Revendications

1. Store cache-bagages ou dispositif (8) pour masquer l'ouverture d'accès d'un espace de chargement, d'un espace de stockage ou du coffre (2) d'un break, comportant une bande de store (15) à l'aide de laquelle on peut fermer l'ouverture d'accès, deux rails de guidage (9, 11) parallèles qui sont disposés à distance l'un de l'autre dans un plan commun qui s'étend devant l'ouverture d'accès à fermer à l'aide du store (8), un certain nombre de barres qui sont fixées sur la bande de store (15), rigidifient ladite bande de store (15) et sont guidées au niveau de leurs extrémités dans les rails de guidage (9, 11), des moyens (17) qui sont disposés dans les rails de guidage (9, 11) qui, lorsque le store (8) est ouvert, reçoivent l'ensemble des barres (14) et qui, avec l'ensemble des barres (14) et la bande de store (15) peuvent être séparés des rails de guidage (9, 11), des pièces de guidage (44) qui sont prévues à une extrémité de chaque barre (14) et sont guidées avec glissement dans les rails de guidage (9, 11) ou les moyens (17) permettant de sortir les barres (14), au moins une pièce de guidage (44) de chaque barre (14) pouvant se déplacer par rapport à la barre (14) dans la direction longitudinale de celle-ci et étant sollicitée par un ressort (55) qui l'éloigne de la barre (14).

2. Dispositif selon la revendication 1, **caractérisé** par le fait que les moyens (17) permettant de sortir les barres (14a ... 14f) comprennent chacun un morceau de rail de guidage.

3. Dispositif selon la revendication 1, **caractérisé** par le fait qu'au moins une partie (16) du rail de guidage (9, 11) est montée fixe sur le véhicule.

4. Dispositif selon la revendication 1, **caractérisé** par le fait que les moyens (17) permettant de sortir les barres (14a ... 14f) sont disposés à une extrémité des rails de guidage (9, 11) concernés.

5. Dispositif selon la revendication 1, **caractérisé** par le fait que l'une (14a) des barres (14a ... 14f) est liée de manière indémontable avec les moyens (17) permettant de sortir les barres (14a ... 14f).

6. Dispositif selon la revendication 1, **caractérisé** par le fait qu'il est prévu pour fixer les moyens (17) permettant de sortir les barres (14a ... 14f) chaque fois un dispositif de fixation (18) et par le fait que les deux dispositifs de fixation (18) sont mutuellement alignés ou, par rapport à la longueur des rails de guidage (9, 11) sont situés à même hauteur.

7. Dispositif selon la revendication 6, **caractérisé** par le fait que le dispositif de fixation (18) est disposé dans le prolongement du rail de guidage (9, 11) concerné.

8. Dispositif selon la revendication 6, **caractérisé** par le fait que le dispositif de fixation (18) est pourvu de moyens d'encliquetage (19) assurant le blocage des moyens (17) permettant de sortir les barres (14a ... 14f) dans le dispositif de fixation (18).

9. Dispositif selon la revendication 6, **caractérisé** par le fait que le dispositif de fixation (18) comporte un logement (25) allongé qui reçoit les moyens (17) permettant de sortir les barres (14a ... 14f), que le logement (25) présente une ouverture (23) pour le passage des barres (14a ... 14f) qui est tournée vers le dispositif de fixation (18) en vis-à-vis et une ouverture de montage (29) par laquelle les moyens (17) permettant de sortir les barres (14a ... 14f) peuvent être engagés ou sortis du logement (25).

10. Dispositif selon les revendications 3 et 9, **caractérisé** par le fait que les logements (25) sont situés à proximité immédiate des parties (16) montées fixes sur le véhicule des rails de guidage (9, 11) de telle sorte que l'ouverture pour le passage des barres (14a ... 14f) et l'ouverture de montage (29) du dispositif de fixation (18) soient situées dans le prolongement du rail de guidage (9, 11) concerné.

11. Dispositif selon la revendication 9, **caractérisé** par le fait que les moyens d'encliquetage (19) comprennent une saillie (31) qui est prévue à une extrémité de l'ouverture de montage (29) voisine du rail de guidage (9, 11) concerné ainsi qu'un évidement (33) en forme de poche prévu à l'extrémité du logement (35) éloignée de la saillie (31), par le fait que la profondeur de l'évidement (33) est supérieure à la hauteur de la saillie (31) et par le fait qu'un organe de mise en précontrainte (38) fait saillie dans l'évidement (33) et permet de mettre en précontrainte en direction de l'extrémité du logement (25) voisine de la saillie (31) le moyen (17) permettant de sortir les barres (14a ... 14f) monté dans le logement (25).

12. Dispositif selon la revendication 1, **caractérisé** par le fait que les rails de guidage (9, 11) ont un profil en C et par le fait que les barres (14a ... 14f) sont liées par complémentarité de forme aux rails de guidage (9, 11) dans la direction longitudinale, rapporté aux barres (14a ... 14f).

13. Dispositif selon la revendication 1, **caractérisé** par le fait que les moyens (17) permettant de sortir les barres (14a ... 14f) comportent un dispositif d'encliquetage (62) par lequel les barres (14a ... 14f) sont tenues par encliquetage dans les moyens (17) permettant de sortir les barres (14a ... 14f).

14. Dispositif selon la revendication 13, **caractérisé** par le fait que le dispositif d'encliquetage est constitué chaque fois par un ressort à lame (62).
